# EUROPEAN PATENT SPECIFICATION

(11) **EP 2 928 624 B1**
(45) Date of publication and mention of the grant of the patent: **11.01.2017**
(21) Application number: 13803284.2
(22) Date of filing: 03.12.2013
(51) Int. Cl.: C04B 14/28, C04B 20/02, C22B 7/00, C22B 26/20, B09B 3/00, C01F 11/18

(54) **PROCESS FOR THE TREATMENT OF SOLID ALKALINE RESIDUE COMPRISING CALCIUM, HEAVY METALS AND SULPHATE**
VERFAHREN ZUR BEHANDLUNG VON FESTEM, ALKALISCHEM RÜCKSTAND MIT CALCIUM, SCHWERMETALLEN UND SULFAT
PROCÉDÉ POUR LE TRAITEMENT DE RÉSIDU ALCALIN SOLIDE COMPRENANT DU CALCIUM, DES MÉTAUX LOURDS ET DU SULFATE

(30) Priority: 06.12.2012 EP 12195860
(43) Date of publication of application: 14.10.2015
(73) Proprietor: Tauw B.V., 7417 DE Deventer (NL)
(72) Inventor: STEKETEE, Jaap, NL-7211 BS Eefde (NL)
(74) Representative: Nederlandsch Octrooibureau
(86) International application number: PCT/NL2013/050866
(87) International publication number: WO 2014/088413

(56) References cited:
- WO-A1-94/12444
- JP-A- S55 147 185
- JP-A- 2005 179 170
- US-A- 5 928 128
- US-B1- 6 403 045

## Description

### Field of the Invention

The invention relates to a process for the treatment of solid alkaline residue comprising calcium, heavy metals and sulphate, in particular incineration residue.

### Background of the Invention

Solid alkaline residues produced in many high temperature industrial processes, such as for example steel production, domestic waste incineration and other incineration processes and combustion processes, may find application in the field of civil-engineering, for example as building material, as foundation or embankment material in road construction or as aggregate in concrete.

Bottom ash obtained in domestic waste incineration for example, is the coarse residue that is left on the grate of the waste incinerator. It typically contains glass, ceramics, minerals, metals and some unburned material. Not all minerals obtained after the incineration process are thermodynamically stable and therefore, the material is susceptible to ageing and weathering by atmospheric water, oxygen and carbon dioxide. As long as metastable minerals and mineral phases are present in the bottom ash, the material will undergo chemical and physical changes, resulting in for example leaching of heavy metals such as antimony, lead, copper, molybdenum and zinc and of salts such as chlorides and sulphates. Leaching of heavy metals to the environment is highly undesirable. National authorities have therefore set limits for such leaching. In order to meet the requirements for cationic metals, i.e. metals that exist mainly as cations in aqueous solutions, incineration residue is sometimes subjected to an accelerated weathering treatment, wherein the material is contacted with carbon dioxide in order to achieve so-called carbonation of the material. Carbonation is a chemical reaction in which calcium hydroxide reacts with carbon dioxide and forms insoluble calcium carbonate:

Ca(OH)₂ + CO₂ → CaCO₃ + H₂O

In WO 94/12444 for example is disclosed a process for carbonation of slags from waste incineration plants (WIP slags), wherein incineration residue is treated with a carbon dioxide-containing gas in order to decrease leaching of heavy metals like copper and lead. The leaching of antimony, however, increases as a result of the carbonation treatment.

In ES 2137071 is disclosed a process for the stabilisation of in particular zinc and lead in solid alkaline waste, by reacting the solid alkaline waste with carbon dioxide at a low pressure and for a short residence time.

US 6 403 045 B1 discloses a process where residues are first washed with Na₂CO₃ solution before being treated with CO₂.
Known carbonation processes, however, result in an increased leaching of anionic metals (i.e. metals that exist mainly as anions in aqueous solutions) such as for example antimony, chromium (as chromates) and vanadium (as vanadates). Leaching of salts such as chlorides and nitrates is not reduced by a carbonation process. Leaching of sulphates strongly increases due to the conversion of ettringite into gympsum that is induced by carbonation. Carbonated material typically exceeds the levels permitted by most national norms for leaching of sulphates and chlorides.

It has been proposed in the art to wash carbonated material with water to reduce leaching of chlorides and sulphates. A problem with water washing, however, is that a large amount of washing water is necessary in view of the low solubility and slow release of sulphate.

Therefore, there is a need in the art for a process for the treatment of solid alkaline residue, such as incineration residue, that not only results in a reduced leaching of cationic metals from the material, but also in a reduced leaching of sulphate and preferably also reduced leaching of anionic metals such as antimony.

### Summary of the Invention

It has now been found that leaching of salts, in particular the leaching of sulphates, from a solid alkaline residue, such as for example steel slag or residue of an incineration or combustion process, can be reduced by first subjected such solid alkaline residue to a carbonation step by reacting the solid residue with carbon dioxide to obtain a carbonated solid material, and then washing the carbonated material with an aqueous stream under such conditions that part of the washed out calcium is precipitated. By precipitating washed out calcium, the amount of sulphate that dissolves in the wash water and is therewith removed from the solid material, importantly increases.

Accordingly, the present invention relates to a process for the treatment of solid alkaline residue comprising calcium, heavy metals and sulphate, the process comprising:
a) reacting the solid alkaline residue with carbon dioxide by contacting the solid alkaline residue with a carbon dioxide containing gas to obtain carbonated solid material; and
c) washing the carbonated solid material with an aqueous stream to obtain washed solid material and wash water comprising calcium and sulphate and precipitating at least part of the calcium in the wash water as calcium carbonate.

An important advantage of the process according to the invention over washing without calcium precipitation is that sulphate is dissolved quicker and more completely and therewith a solid material with less leachable sulphate is obtained. It will therefore be possible to use the treated material in civil engineering applications without exceeding the limits for allowable sulphate leaching to the environment. Moreover, less water will be needed for washing the same or even a higher amount of sulphate from the solid material.

In a preferred embodiment, the carbonated material obtained in step a) is mineralised before being washed in step c). In this mineralisation step b), the carbonated solid material is contacted with an oxygen-containing gas for a period in the range of from 1 week to 12 months, preferably at a mineralisation temperature in the range of from 20 to 90 °C and preferably under conditions that the moisture content of the material is kept between 5 and 20 wt%. In this mineralisation step, anionic metals, in particular antimony, are fixated in the material resulting in less leachable anionic metals. Moreover, mineralisation typically results in a further increase in the amount of leachable sulphate, so that more sulphate can be removed from the material in washing step c).

It is an advantage of the process according to the invention that the preferred mineralisation temperature can be achieved without making use of an external heat source. This is achieved by making use of the heat generated by the exothermic carbonation and mineralisation reactions. By for example carefully choosing the dimensions of any depot or reservoir wherein the solid residue to be treated is provided, and carefully choosing the flows of the carbon dioxide containing gas and the oxygen-containing gas used in steps a) and c), the mineralisation temperature can be controlled.

### Detailed Description of the Invention

In the process according to the invention, solid alkaline residue is treated in order to decrease the amount of leachable components by first carbonating the material by contacting the solid alkaline residue with a carbon dioxide containing gas to obtain carbonated solid material (carbonation step a)) and then washing the carbonated solid material with an aqueous stream to obtain washed solid material and wash water comprising calcium and sulphate and precipitating at least part of the calcium in the wash water as calcium carbonate (washing step c)). Preferably, the carbonated solid material obtained in step a) is mineralised in a mineralisation step b) prior to being subjected to washing step c). Reference herein to decreasing the amount of leachable components is to fixation of leachable components or to removal of leachable components.

The solid alkaline residue may be any solid alkaline residue from an industrial process involving very high temperatures, incineration or combustion. Preferably, the solid alkaline residue is selected from the group consisting of steel work dust, steel slag, residues from an incineration process, and residues from a combustion process. More preferably, the solid alkaline residue is bottom ash from an incineration process, even more preferably bottom ash from incineration of domestic waste or comparable waste.

Such solid alkaline residues typically are an assemblage of metastable minerals and mineral phases that include single or mixed oxides of calcium, magnesium, and iron and silicates, and further chlorides, sulphates, and heavy metals, such as zinc, lead, molybdenum, antimony, cadmium and copper.

In step a), the solid alkaline residue is carbonated by contacting the residue with a carbon dioxide-containing gas.

In carbonation step a), cationic heavy metals such as for example copper, lead, zinc and cadmium are fixated in the solid material and sulphate and antimony are released from sulphate-containing minerals such as for example ettringite or from calcium-containing minerals such as romeite. As a result, leaching of cationic heavy metals will decrease and sulphate can be removed in a subsequent washing step to yield a final material showing decreased sulphate leaching.

The carbon dioxide-containing gas may be any suitable carbon dioxide containing gas, for example a mixture of air and carbon dioxide, or a flue gas from a combustion process. Preferably, the carbon dioxide-containing gas is a mixture of air and carbon dioxide, more preferably a mixture of air and carbon dioxide comprising in the range of from 4 to 16 vol% carbon dioxide based on the total volume of the mixture. In case flue gas is available at the location at which the carbonation will take place, it may be advantageous to use the available flue gas.

Carbonation of solid alkaline residue such as incineration residue is well-known in the art. Any suitable carbonation conditions known in the art may be used.

The gas may be contacted with the solid residue in any suitable manner, typically by leading a flow of the carbon dioxide-containing gas through a depot of solid alkaline residue, for example by injecting the gas into the depot. Such depot may be an open-air depot of solid residue or a depot in a container, such as for example a silo or a composting tunnel. Preferably, the flow of carbon dioxide containing gas through the solid material is in the range of from 0.1 to 10 m³ gas per ton solid material per hour, more preferably in the range of from 1 to 5 m³ gas per ton solid material per hour.

Carbonation is preferably carried out until conversion of any calcium or magnesium hydroxide or reactive calcium or magnesium silicate into its corresponding carbonate is complete or substantially complete. The degree of conversion can suitably be monitored by determining the pH of the solid residue. This can for example be done by measuring the pH in a slurry of the solid residue in water. Preferably, carbonation is carried out until the pH of the solid residue has decreased to a value in the range of from 8.0 to 8.5. Typically, in case of carbonation in large depots with a height of e.g. five metres or more, a carbonation time in the range of from 3 to 10 days, usually 4 to 7 days, will be required to achieve such pH decrease. It will be appreciated that the required time will *inter alia* depend on the height of the depot, the temperature, the pressure, the concentration of carbon dioxide in the carbon dioxide-containing gas, and the flow velocity of the gas through the solid residue.
Step a) may be carried out at any suitable temperature, preferably at a temperature in the range of from 20 to 90 °C, more preferably of from 25 to 60 °C. Any suitable pressure may be applied. Preferably, step a) is carried out at atmospheric pressure.

The carbonated solid material obtained in step a) is preferably subjected to a mineralisation step b), prior to being washed in washing step c), to obtain mineralised carbonated solid material. In mineralisation step b), the carbonated solid material is contacted with a molecular-oxygen containing gas, preferably air. Preferably, the solid material is kept at a mineralisation temperature in the range of from 20 to 90 °C during the contacting in step b), more preferably in the range of from 40 to 60 °C. Preferably, the solid material has a moisture content in the range of from 5 to 20 w%, more preferably of from 8 to 15 wt%, during the contacting with oxygen-containing gas.

It has been found that if the temperature of the material is kept in the preferred range of from 20 to 90 °C, more preferably of from 40 to 60 °C, and the moisture content of the material in the range of from 5 and 20 wt%, preferably of from 8 to 15 wt%, antimony can be fixated to an extent that antimony leaching from the material can be kept below the maximum level allowed. A further effect of the mineralisation step is further release of sulphate from sulphate-containing minerals.

The oxygen-containing gas may be contacted with the carbonated solid material in any suitable manner, typically by leading a flow of the oxygen-containing gas through a depot of carbonated solid residue, for example by injecting the gas into the depot. Such depot may be an open-air depot of solid residue or a depot in a container, such as for example a silo or a composting tunnel. Preferably, the flow of oxygen-containing gas through the solid material is in the range of from 0.01 to 10 m³ gas per ton solid material per hour, more preferably in the range of from 0.1 to 1 m³ gas per ton solid material per hour. Suitably, carbonation step a) and mineralisation step b) are carried out by first leading a mixture of carbon dioxide containing gas and air through a depot of alkaline solid residue and then, after sufficient carbonation has taken place, continue with only leading air through the depot.

Mineralisation will be carried out until sufficient mineralisation of anionic metals, in particular antimony, has taken place. Reference herein to sufficient mineralisation is to so much mineralisation that antimony leaching of the mineralised material does not exceed the applicable norms. The extent of mineralisation can be determined by performing a leaching test, e.g. a column test or other leaching test known in the art or required by the local authorities. Typically, the mineralisation time needed for sufficient fixation of antimony and other metals will be in the range of from 1 week to 12 months, preferably in the range of from 2 weeks to 12 months, more preferably of from 6 weeks to 6 months. Although a relatively slow process step, it is a significant acceleration compared to the speed of mineralisation by natural weathering processes that occur if the material is stored in the open air without further treatment.

Preferably, the temperature of the carbonated solid material is kept within the preferred mineralisation temperature range without using an external heat source. This can be done my making use of the heat generated during the exothermic carbonation and mineralisation reactions that take place in steps a) and b). By carefully choosing the dimensions of the depot of solid material through which the gas is leaded and carefully choosing the flow of gas through the solid material (in terms of volume of gas per weight per time unit), the heat generated is sufficiently retained in the material in order to achieve the desired temperature.

It has further been found that a moisture content of the solid material that is contacted with the oxygen-containing gas in mineralisation step b) below 20 wt% is preferred, more preferably below 15 wt%, even more preferably below 12 wt%. It has been found that such relatively low moisture content results in an increased fixation of antimony. Preferably, the moisture content is not lower than 5 wt%, more preferably not lower than 8 wt%. A moisture content in the range of from 8 to 12 wt% is particularly preferred. If step b) is carried out at the preferred elevated mineralisation temperature (elevated compared to ambient temperature) the desired moisture content can be achieved by carefully choosing the dimensions of the depot of solid material through which the gas is leaded and carefully choosing the flow of gas through the solid material, so that any moisture evaporated due to the elevated mineralisation temperature can be discharged from the depot with the gas stream through the depot.

In step c) the carbonated solid material, preferably after a mineralisation step b), is washed with an aqueous stream to obtain washed solid material and wash water comprising calcium and sulphate. At least part of the calcium in the wash water is precipitated as calcium carbonate. Washing with an aqueous stream may be carried out in any suitable way, preferably by spraying the aqueous stream over a depot of the solid material and draining wash water from the bottom of the depot.

Calcium may be precipitated in the wash water before or after separation of the wash water from the washed solid material. If calcium is precipitated after separation of the wash water from the washed solid material, a calcium-depleted wash water is obtained that is recycled to wash step c) to form part of the aqueous stream with which the carbonated solid material is washed.

Preferably, at least part of the calcium is precipitated in the wash water by adding a carbonate salt to the aqueous stream used for washing the solid material or by adding a carbonate salt or a carbonate-forming compound such as for example carbon dioxide to the wash water after separation of the wash water from the washed solid material.

The carbonate salt may be any carbonate salt that is soluble in water under the conditions applied in washing step c), typically ambient conditions. The carbonate salt preferably is sodium carbonate, potassium carbonate or magnesium carbonate. In one preferred embodiment of the invention, sodium carbonate is added to the aqueous stream used for washing the carbonated solid material. As a result, the wash water will comprises carbonate and at least part of the washed out calcium will precipitate as calcium carbonate. The resulting lower concentration of dissolved calcium in the wash water increases the solubility of sulphate, which normally is present as gypsum, and therewith, more sulphate can be removed from the carbonated solid material and a lower volume of aqueous stream is needed for removing sulphate.

Alternatively, the carbonated solid material may be washed with water as aqueous stream under simultaneous contacting of the carbonated solid material with a carbon dioxide containing gas, for example pure carbon dioxide or a mixture of air and carbon dioxide, preferably comprising 4-8 vol% carbon dioxide. Calcium carbonate will then precipitate, typically on the solid material. As a result of the presence of carbon dioxide, the pH of the water that is contacting the solid material may decrease to a value below 7. If this is the case, the pH of the water is adjusted by adding an alkaline compound to the aqueous stream so that the pH of the water that is contacting the solid has a value in the range of from 7 to 8. In this embodiment (adding a carbon dioxide containing gas to the solid material), wash water separated from the solid material may be recycled to the solid material to form part of the aqueous stream with which the carbonated solid material is washed.

Instead of adding a carbonate salt to the aqueous stream that is contacted with the solid material or of adding carbon dioxide to the solid material during washing, a carbonate salt or a carbonate-forming compound such as carbon dioxide may be added to the wash water after it has been separated from the washed solid material in order to precipitate calcium from the separated wash water and obtain calcium-depleted wash water. The calcium-depleted wash water thus obtained is then at least partly recycled to the carbonated solid material to be washed to form part of the aqueous steam used for washing. As a result of the recycling, the concentration of sulphate in the aqueous stream and wash water will increase. After the sulphate concentration in the wash water has achieved a predetermined level, for example 1 wt%, wash water will be withdrawn from the process in order to remove sulphates from the process.

In a preferred embodiment of the invention, a carbon dioxide containing gas is added to the wash water separated from the washed solid material as a carbonate-forming compound. In order to achieve precipitation of calcium carbonate, the pH of the separated wash water needs to be in the range of from 7 to 8. If necessary, the pH of the separated wash water to which carbon dioxide is added is adjusted to a value in the range of from 7 to 8, preferably in the range of from 7.3 to 7.7, by adding an alkaline compound, for example sodium hydroxide, to the separated wash water.

The aqueous stream preferably is water. The amount of carbonate salt or of carbonate-forming compound added to the aqueous stream or to the separated wash water is preferably in the range of from 0.8 to 1.2 mole carbonate or carbonate equivalents per mole of sulphate to be removed from the solid material.

As a result of washing step c), the amount of leachable anionic metals in the solid material, in particular antimony, may have increased. Therefore, it might be desirable to subject the washed solid material obtained in step c) to a mineralisation step d). Step d) may suitably be carried out in the same way as hereinabove described for step b). Preferably, the washed solid material is kept at a temperature in the range of from 20 to 90 °C during the contacting in step d), more preferably of from 40 to 60 °C. Preferably, the washed solid material is kept at a moisture content in the range of from 5 to 20 wt%, more preferably of from 8 to 15 wt%, even more preferably of from 8 to 12 wt% during the contacting in step d). In step d), however, an external heat source might be required to achieve the preferred mineralisation temperature and/or moisture content, since no use can be made of the heat generated in a preceding exothermic carbonation step.

The invention will be further illustrated by means of the following non-limiting examples.

### Examples

### EXAMPLE 1 (effect of wash step)

### Experiment 1 - washing with water (not according to the invention)

Bottom ash from a domestic waste incinerator was washed with water by upwardly flowing a stream of 0.18 m³ of water per ton bottom ash per day through a container with bottom ash that was open at the top. The flow velocity was such that wash water was allowed to flow away from the top of the solid material without entraining solid material. The washing was carried out until 2.5 m³ of water per ton bottom ash had flown through the bottom ash.

The concentration of sulphate in the wash water separated from the bottom ash was determined by means of inductive coupled plasma emission spectroscopy (ICP-ES) analysis at several points in time during the washing step and the cumulative amount of sulphate washed from the solid material (mg sulphate per kg dry bottom ash) at such point of time was calculated.

### Experiment 2 - washing with a solution of sodium carbonate in water (according to the invention)

Bottom ash from a domestic waste incinerator was washed with a solution of sodium carbonate in water (9.54 grams sodium carbonate per litre water) by upwardly flowing a stream of 0.18 m³ of sodium carbonate solution per ton bottom ash per day through a container with bottom ash that was open at the top. The flow velocity was such that wash water was allowed to flow away from the top of the solid material without entraining solid material. The washing was carried out until 1.0 m³ of solution per ton bottom ash had flown through the bottom ash. The washing was then continued with water until 2.5 m³ of aqueous stream (total of sodium carbonate solution and water) per ton bottom ash had flown through the bottom ash.

The concentration of sulphate in the wash water separated from the bottom ash was determined by ICP-ES analysis at several points in time during the washing step and the cumulative amount of sulphate washed from the solid material (mg sulphate per kg dry bottom ash) at such point of time was calculated.

### Experiment 3 - washing with recycled calcium-depleted wash water (according to the invention)

Bottom ash from a domestic waste incinerator was washed by flowing a stream of 0.18 m³ of water per ton bottom ash per day through a container with bottom ash that was open at the top. The flow velocity was such that wash water was allowed to flow away from the top of the solid material without entraining solid material. In a separate reactor, the wash water that was separated from the bottom ash was contacted with a flow of pure carbon dioxide gas with a velocity of 0.15 litres carbon dioxide per litre wash water per hour, whilst the pH of the wash water was maintained at a value of 7.5 by addition of sodium hydroxide to the separate reactor. The wash water was then separated from the precipitated calcium carbonate and recycled to the bottom ash to serve as the water stream with which the bottom ash was washed. This washing with recycled calcium-depleted wash water was carried out until 1.0 m³ of solution per ton bottom ash had flown through the solid material. The washing was then continued with water until 2.5 m³ of aqueous stream per ton bottom ash had flown through the solid material.

As in experiments 1 and 2, the concentration of sulphate in the wash water separated from the bottom ash was determined and the cumulative amount of sulphate washed from the solid material calculated.

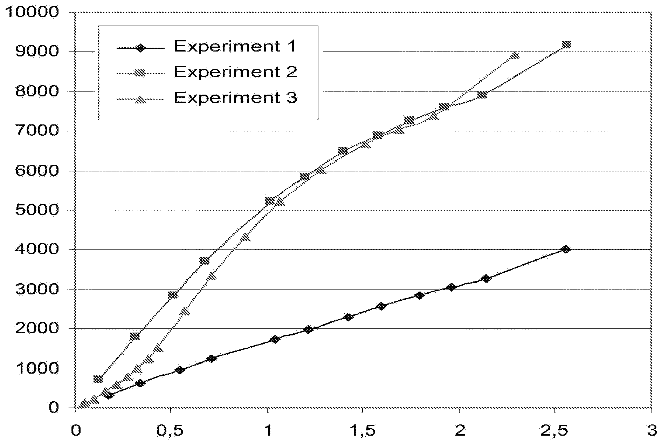

In Figure 1, is shown the amount of sulphate (Y-axis; in mg sulphate per kilogram dry solid material) washed from the bottom ash as a function of the quantity of aqueous stream flown through the bottom ash (X-as; in cubic metres aqueous stream per ton of solid material) for experiments 1-3.

Figure 1 shows that if the washing step is carried out under conditions that calcium precipitates in the wash water, a much lower volume of aqueous stream is needed for the washing in order to remove the same amount of sulphate.

### EXAMPLE 2 (effect of mineralisation step)

Experiment a: carbonation step (1 week), followed by washing step, followed by post mineralisation step (8 weeks) as described hereinbelow.
Experiment b: carbonation step (1 week), followed by mineralisation step (2 weeks), followed by washing step, followed by post mineralisation step (8 weeks) as described hereinbelow.

### Carbonation step

During one week a stream of 5 vol% carbon dioxide in air was led with a flow rate in the range of from 0.9 to 1.4 m3 per ton bottom ash per hour through bottom ash of a domestic waste incinerator that was kept in a container which was open at the top. The bottom ash was kept at a temperature of 40 °C and a moisture content of 15 wt% (based on the dry weight of the bottom ash)

### Mineralisation step

During two weeks a stream of air was led with a flow rate in the range of from 0.9 to 1.4 m³ per ton bottom ash per hour through the carbonated material obtained in the carbonation step. The bottom ash was kept at a temperature of 40 °C and a moisture content of 15 wt% (based on the dry weight of the bottom ash).

### Washing step

The carbonated or mineralised bottom ash was washed with water until a liquid/solid ratio of 8 cubic metres water per ton bottom ash was reached.

### Post mineralisation step

During eight weeks, the washed solid material (50 tons) was exposed to the open air.

The copper, antimony and sulphate emissions from the solid material was determined after each treating step by first leaching copper, antimony and sulphate from the material by means of a batch leaching test with water (liquid/solid ratio of 20 litres water per kg solid material) and then determining the amount of leached copper, antimony and sulphate by means of ICP-ES analysis. In the Table is shown the results of these measurements.

**Table - Emissions of Cu, Sb and sulphate after several process steps. All emissions in mg per kg dry solid material**

| | Experiment a | | | Experiment b | | |
|---|---|---|---|---|---|---|
| | Cu | Sb | SO₄ | Cu | Sb | SO₄ |
| Start | 2.9 | 0.98 | 6,500 | 2.5 | 1.13 | 6,000 |
| Carbonated | 1.9 | 1.44 | 9,500 | n.m. | n.m. | n.m. |
| Mineralised | n.a. | n.a | n.a. | 1.2 | 0.80 | 8,000 |
| Washed | 1.0 | 0.86 | 2,600 | 0.87 | 0.61 | 1,670 |
| Post mineralised | 0.8 | 0.65 | 2,450 | 0.56 | 0.45 | 1,160 |

| | | | | | | |
|---|---|---|---|---|---|---|
| n.m.: not measured; n.a.: not applicable. | | | | | | |

It can be seen from the results that a mineralisation step between the carbonation and washing step results in a significant reduced amount of antimony in the carbonated and mineralised material compared to the material that is only carbonated. The final emissions (in the post mineralized material) are clearly lower in Experiment b than in Experiment a. Further, the wash water obtained in Experiment b is less polluted than the wash water obtained in Experiment a and therefore easier to treat.

## Claims

1. A process for the treatment of solid alkaline residue comprising calcium, heavy metals and sulphate, the process comprising:
a) reacting the solid alkaline residue with carbon dioxide by contacting the solid alkaline residue with a carbon dioxide containing gas to obtain carbonated solid material; and
c) washing the carbonated solid material with an aqueous stream to obtain washed solid material and wash water comprising calcium and sulphate and precipitating at least part of the calcium in the wash water as calcium carbonate.

2. A process according to claim 1, wherein at least part of the calcium is precipitated in the wash water by adding a carbonate salt to the aqueous stream.

3. A process according to claim 1, wherein at least part of the calcium is precipitated in the wash water by washing the carbonated solid material with an aqueous stream whilst flowing a stream of carbon dioxide-containing gas through the carbonated solid material.

4. A process according to claim 1 wherein at least part of the calcium is precipitated in the wash water by adding a carbonate salt or a carbon dioxide-containing gas to the wash water after separation of the wash water from the washed solid material, step c) comprising:
- washing the carbonated solid material with an aqueous stream comprising recycled wash water or water and recycled wash water;
- separating wash water from the carbonated solid material to obtain the washed solid material and the wash water comprising calcium and sulphate;
- supplying the wash water to a separate container;
- adding a carbonate salt or a carbon dioxide-containing gas to the wash water in the separate container to precipitate part of the calcium and to obtain calcium-depleted wash water, wherein, in case a carbon dioxide-containing gas is added to the wash water, the pH of the wash water is adjusted to a value in the range of from 7 to 8 by adding an alkaline compound to the wash water; and
- recycling the calcium-depleted wash water to the carbonated solid material as part of the aqueous stream.

5. A process according to any one of the preceding claims further comprising the following step:
b) contacting, for a time period in the range of from 1 week to 12 months, the carbonated solid material obtained in step a) with a molecular-oxygen containing gas, to obtain mineralised carbonated solid material,
and wherein in step c) the carbonated solid material is the mineralised carbonated solid material obtained in step b).

6. A process according to claim 5, wherein the molecular-oxygen containing gas is air.

7. A process according to claim 5 or 6, wherein the solid material is kept at a mineralisation temperature in the range of from 20 to 90 °C during the contacting in step b).

8. A process according to claim 7, wherein the mineralisation temperature is in the range of from 40 to 60 °C.

9. A process according to claim 7 or 8, wherein no external heat source is used to achieve the mineralisation temperature.

10. A process according to any one of claims 5 to 9, wherein the solid material is kept at a moisture content in the range of from 5 to 20 wt% during the contacting in step b).

11. A process according to claim 10, wherein the moisture content of the solid material is kept in the range of from 8 and 12 wt% during the contacting in step b).

12. A process according to any one of the preceding claims further comprising the following step:
d) contacting the washed solid material obtained in step c) with an oxygen-containing gas, for a time period in the range of from 1 week to 12 months.

13. A process according to claim 12, wherein the washed solid material is kept at a temperature in the range of from 20 to 90 °C during the contacting in step d).

14. A process according to claim 12 or 13, wherein the washed solid material is kept at a moisture content in the range of from 5 to 20 wt% during the contacting in step d).

15. A process according to any one of the preceding claims, wherein the solid, alkaline residue is bottom ash from an incineration process.

## Patentansprüche

1. Verfahren zur Behandlung eines festen alkalischen Rückstands, enthaltend Calcium, Schwermetalle und Sulfat, wobei das Verfahren umfasst:
a) Umsetzten des festen alkalischen Rückstands mit Kohlendioxid, indem der feste alkalische Rückstand mit einem Kohlendioxid enthaltenden Gas in Kontakt gebracht wird, um ein karbonisiertes festes Material zu erhalten; und
c) Waschen des karbonisierten festen Materials mit einem wässrigen Strom, um gewaschenes festes Material und Calcium und Sulfat enthaltendes Waschwasser zu erhalten und Ausfällen von zumindest eines Teils des Calciums im Waschwasser als Calciumcarbonat.

2. Verfahren nach Anspruch 1, wobei zumindest ein Teil des Calciums im Waschwasser durch Hinzugeben eines Carbonat-Salzes zum wässrigen Strom ausgefällt wird.

3. Verfahren nach Anspruch 1, wobei zumindest ein Teil des Calciums im Waschwasser ausgefällt wird, indem das karbonisierte feste Material mit einem wässrigen Strom gewaschen wird, während ein Strom eines Kohlendioxid enthaltenden Gases durch das karbonisierte feste Material strömt.

4. Verfahren nach Anspruch 1, wobei zumindest ein Teil des Calciums im Waschwasser ausgefällt wird, indem nach dem Abtrennen des Waschwassers vom gewaschenen festen Material ein Carbonat-Salz oder ein Kohlendioxid enthaltendes Gas zum Waschwasser hinzugegeben wird, wobei Schritt c) umfasst:
- Waschen des karbonisierten festen Materials mit einem wässrigen Strom, der recyceltes Waschwasser oder Wasser und recyceltes Waschwasser umfasst;
- Abtrennen des Waschwassers vom karbonisierten festen Material, um das gewaschene feste Material und karbonisiertes festes Material und das Calcium und Sulfat enthaltende Waschwasser zu erhalten;
- Zuführen des Waschwassers in einen separaten Behälter;
- Hinzugeben eines Carbonat-Salzes oder eines Kohlendioxid enthaltenden Gases zum Waschwasser im separaten Behälter, um einen Teil des Calciums auszufällen und ein Calcium-abgereichertes Waschwasser zu erhalten, wobei, falls ein Kohlendioxid enthaltendes Gas zum Waschwasser hinzugegeben wird, der pH des Waschwassers durch Hinzugeben einer alkalischen Verbindung zum Waschwasser auf einen Wert im Bereich von 7 bis 8 eingestellt wird; und
- Recyceln des Calcium-abgereicherten Waschwassers zum karbonisierten festen Material als Teil des wässrigen Stroms.

5. Verfahren nach einem der vorhergehenden Ansprüche, das weiterhin den folgenden Schritt umfasst:
b) Kontaktieren des in Schritt a) erhaltenen karbonisierten festen Materials, über einen Zeitraum im Bereich von 1 Woche bis 12 Monaten, mit einem molekularen Sauerstoff enthaltenden Gas, um mineralisiertes karbonisiertes festes Material zu erhalten,
und wobei im Schritt c) das karbonisierte feste Material das in Schritt b) erhaltene mineralisierte karbonisierte feste Material ist.

6. Verfahren nach Anspruch 5, wobei das molekularen Sauerstoff enthaltende Gas Luft ist.

7. Verfahren nach Anspruch 5 oder 6, wobei das feste Material während des Kontaktierens im Schritt b) bei einer Mineralisierungstemperatur im Bereich von 20 bis 90 °C gehalten wird.

8. Verfahren nach Anspruch 7, wobei die Mineralisierungstemperatur im Bereich von 40 bis 60 °C liegt.

9. Verfahren nach Anspruch 7 oder 8, wobei keine externe Wärmequelle verwendet wird, um die Mineralisierungstemperatur zu erreichen.

10. Verfahren nach einem der Ansprüche 5 bis 9, wobei das feste Material während des Kontaktierens im Schritt b) bei einem Feuchtegehalt im Bereich von 5 bis 20 Gew.-% gehalten wird.

11. Verfahren nach Anspruch 10, wobei während des Kontaktierens im Schritt b) der Feuchtegehalt des festen Materials im Bereich von 8 bis 12 Gew.-% gehalten wird.

12. Verfahren nach einem der vorhergehenden Ansprüche, das weiterhin den folgenden Schritt umfasst:
d) Kontaktieren des in Schritt c) erhaltenen gewaschenen festen Materials mit einem Sauerstoff enthaltenden Gas, über einen Zeitraum im Bereich von 1 Woche bis 12 Monaten.

13. Verfahren nach Anspruch 12, wobei das gewaschene feste Material während des Kontaktierens im Schritt d) bei einer Temperatur im Bereich von 20 bis 90 °C gehalten wird.

14. Verfahren nach Anspruch 12 oder 13, wobei das gewaschene feste Material während des Kontaktierens im Schritt d) bei einem Feuchtegehalt im Bereich von 5 bis 20 Gew.-% gehalten wird.

15. Verfahren nach einem der vorhergehenden Ansprüche, wobei der feste, alkalische Rückstand Bettasche aus einem Abfallverbrennungsprozess ist.

## Revendications

1. Procédé de traitement de résidu alcalin solide comprenant du calcium, des métaux lourds et du sulfate, ledit procédé comprenant :
a) la réaction du résidu alcalin solide avec du dioxyde de carbone par la mise en contact du résidu alcalin solide avec un gaz contenant du dioxyde de carbone pour obtenir une matière solide carbonée ; et
c) le lavage de la matière solide carbonée avec un flux aqueux pour obtenir une matière solide lavée et une eau de lavage comprenant du calcium et du sulfate et la précipitation d'au moins une partie du calcium dans l'eau de lavage sous forme de carbonate de calcium.

2. Procédé selon la revendication 1, dans lequel au moins une partie du calcium est précipitée dans l'eau de lavage par ajout d'un sel de carbonate au flux aqueux.

3. Procédé selon la revendication 1, dans lequel au moins une partie du calcium est précipitée dans l'eau de lavage en lavant la matière solide carbonée avec un flux aqueux tout en faisant s'écouler un flux de gaz contenant du dioxyde de carbone à travers la matière solide carbonée.

4. Procédé selon la revendication 1, dans lequel au moins une partie du calcium est précipitée dans l'eau de lavage par ajout d'un sel de carbonate ou d'un gaz contenant du dioxyde de carbone à l'eau de lavage après séparation de l'eau de lavage de la matière solide lavée, l'étape c) comprenant :
- le lavage de la matière solide carbonée avec un flux aqueux comprenant de l'eau de lavage recyclée ou de l'eau et de l'eau de lavage recyclée ;
- la séparation de l'eau de lavage de la matière solide carbonée pour obtenir la matière solide lavée et l'eau de lavage comprenant du calcium et du sulfate ;
- l'alimentation d'un récipient séparé par l'eau de lavage ;
- l'ajout d'un sel de carbonate ou d'un gaz contenant du dioxyde de carbone à l'eau de lavage dans le récipient séparé pour faire précipiter une partie du calcium et pour obtenir une eau de lavage appauvrie en calcium, dans lequel, dans le cas où un gaz contenant du dioxyde de carbone est ajouté à l'eau de lavage, le pH de l'eau de lavage est réglé à une valeur comprise entre 7 et 8 par ajout d'un composé alcalin à l'eau de lavage ; et
- le recyclage de l'eau de lavage appauvrie en calcium vers la matière solide carbonée sous la forme d'une composante du flux aqueux.

5. Procédé selon l'une quelconque des revendications précédentes, comprenant en outre l'étape suivante :
b) mise en contact, pendant une durée comprise entre 1 semaine et 12 mois, de la matière solide carbonée obtenue à l'étape a) avec un gaz contenant de l'oxygène moléculaire, pour obtenir une matière solide carbonée minéralisée,
et dans lequel à l'étape c), la matière solide carbonée est la matière solide carbonée minéralisée obtenu à l'étape b).

6. Procédé selon la revendication 5, dans lequel le gaz contenant de l'oxygène moléculaire est l'air.

7. Procédé selon la revendication 5 ou 6, dans lequel la matière solide est maintenue à une température de minéralisation comprise entre 20 et 90° pendant la mise en contact de l'étape b).

8. Procédé selon la revendication 7, dans lequel la température de minéralisation est comprise entre 40 et 60°C.

9. Procédé selon la revendication 7 ou 8, dans lequel on n'utilise pas de source de chaleur externe pour atteindre la température de minéralisation.

10. Procédé selon l'une quelconque des revendications 5 à 9, dans lequel la matière solide est maintenue à un taux d'humidité compris entre 5 et 20 % en poids pendant la mise en contact de l'étape b).

11. Procédé selon la revendication 10, dans lequel le taux d'humidité de la matière solide est maintenu entre 8 et 12 % en poids pendant la mise en contact de l'étape b).

12. Procédé selon l'une quelconque des revendications précédentes, comprenant en outre l'étape suivante :
d) mise en contact de la matière solide lavée obtenue à l'étape c) avec un gaz contenant de l'oxygène, pendant une durée comprise entre 1 semaine et 12 mois.

13. Procédé selon la revendication 12, dans lequel la matière solide lavée est maintenue à une température comprise entre 20 et 90°C pendant la mise en contact de l'étape d).

14. Procédé selon la revendication 12 ou 13, dans lequel la matière solide lavée est maintenue à un taux d'humidité compris entre 5 et 20 % en poids pendant la mise en contact de l'étape d).

15. Procédé selon l'une quelconque des revendications précédentes, dans lequel le résidu alcalin solide est formé des cendres résultant d'un procédé d'incinération.
